# DEMANDE DE BREVET EUROPEEN

(11) **EP 4 243 278 A1**
(43) Date de publication de la demande: **13.09.2023**
(21) Numéro de dépôt: 23160791.2
(22) Date de dépôt: 08.03.2023
(51) Int. Cl.: H02S 20/00, H02S 20/10, H02S 20/20, H02S 20/30, H02S 20/32

(54) **SYSTEME DE CONNEXION DE PANNEAUX PHOTOVOLTAIQUES SUR UNE STRUCTURE COMPRENANT DES CABLES SUSPENDUS**

(30) Priorité: 08.03.2022 FR 2202022
(71) Demandeur: TSE, 06560 Valbonne Sophia Antipolis (FR)
(72) Inventeur: BURTIN, Denis, 38210 Vourey (FR); MASSAROTTI, Paolo, 38300 Domarin (FR)
(74) Mandataire: Murgitroyd & Company

(57) **Abrégé**

La présente invention concerne un système de panneaux photovoltaïques adapté pour fixer des panneaux photovoltaïques au-dessus d'un support selon un angle d'inclinaison déterminé par rapport au support, le système comprenant des poteaux de support fixés sur ledit support, des câbles porteurs suspendus entre les poteaux de support et des moyens de fixation pour fixer les panneaux photovoltaïques aux câbles porteurs, lesdits moyens de fixation comprenant des éléments de support, tels que des poutres, assemblés aux câbles porteurs, dans lequel le système comprend des câbles auxiliaires, lesdits câbles auxiliaires étant suspendus entre les poteaux de support et positionnés dans un plan vertical, de manière essentiellement parallèle aux câbles porteurs et à distance desdits câbles porteurs, lesdits moyens de fixation comprenant des éléments de fixation s'étendant dans un plan essentiellement vertical, lesdits éléments de fixation étant positionnés entre lesdits câbles porteurs et lesdits câbles auxiliaires, les éléments de fixation étant adaptés pour fixer les éléments de support aux câbles.

## Description

### Domaine de l'invention

L'invention concerne un système de panneaux photovoltaïques fixés au-dessus d'un support, selon une inclinaison déterminée par rapport au support, ledit système comprenant des poteaux de support fixés sur le support, des câbles suspendus entre les poteaux de support et des moyens de fixation pour fixer des panneaux photovoltaïques aux câbles.

Plus précisément, le système de panneaux photovoltaïques selon l'invention est adapté pour libérer l'espace situé au-dessous desdits panneaux photovoltaïques, ledit espace pouvant de ce fait être utilisé, par exemple, pour des activités agricoles.

Les panneaux sont orientables dans le but d'optimiser la production d'énergie mais également de rendre des services à l'agriculture notamment vis-à-vis de l'ombrage, de la diminution de températures et des amplitudes thermiques, laisser passer ou non l'ensemble des précipitations entre autres.

Le système de connexion des panneaux photovoltaïques selon l'invention est adapté pour faciliter la fixation des panneaux photovoltaïques sur des câbles suspendus.

### Etat de la technique

L'utilisation de systèmes comprenant des panneaux photovoltaïques, disposés au-dessus d'un support selon une inclinaison déterminée par rapport audit support, a déjà été divulguée dans l'art antérieur. Plusieurs systèmes de ce type, pourvus de panneaux photovoltaïques, sont actuellement utilisés lors de la création de centrales photovoltaïques adaptées à la production d'électricité.

En règle générale, pour créer une centrale photovoltaïque, des panneaux photovoltaïques sont fixés sur des structures positionnées sur le sol, lesdits panneaux photovoltaïques demeurant près du sol. Ce type d'installation permet d'accéder aisément aux panneaux photovoltaïques pour leur entretien et leur éventuel remplacement en cas de besoin.

Dans l'art antérieur, des systèmes pourvus de panneaux photovoltaïques sont connus, lesdits panneaux photovoltaïques étant fixés sur une structure, à une distance relativement importante par rapport au sol. Ces systèmes présentent l'avantage de libérer la surface du sol et permettent l'utilisation de la surface présente au-dessous desdits panneaux photovoltaïques dans un but autre que celui de produire de l'énergie électrique. A titre d'exemple, le fait de positionner des panneaux photovoltaïques au-dessus des parkings destinés aux véhicules est déjà connu dans l'art antérieur. Ce type d'installation présente l'avantage de permettre l'utilisation de l'espace pour deux objectifs distincts, d'une part garer les véhicules et, d'autre part produire de l'énergie électrique grâce aux panneaux photovoltaïques installés au-dessus des véhicules.

Cependant, les systèmes divulgués dans l'art antérieur présentent des inconvénients. En effet, les structures nécessaires à la fixation des panneaux photovoltaïques à une distance importante par rapport au sol sont relativement encombrantes. Ces systèmes utilisent une quantité importante de poteaux nécessaires pour supporter l'installation des panneaux photovoltaïques, ce qui limite les possibilités d'utilisation de l'espace situé au-dessous desdits panneaux. Dans le cas des parkings dédiés aux véhicules, la présence des poteaux est acceptable car ces derniers délimitent également des emplacements individuels sur lesdits parkings. En revanche, une telle quantité de poteaux représente un inconvénient dans le cas où l'utilisateur souhaite utiliser l'espace situé au-dessous des panneaux photovoltaïques pour des activités agricoles.

De plus, les systèmes utilisant des panneaux photovoltaïques connus dans l'art antérieur présentent un autre inconvénient. En effet, les structures soutenant les panneaux photovoltaïques qui sont situés à une distance déterminée par rapport au sol sont souvent relativement onéreuses à produire.

Par conséquent, il existe un besoin de proposer de nouvelles structures permettant de disposer de manière optimale de l'espace situé au-dessous des panneaux photovoltaïques et de réduire les coûts de production associés auxdites structures.

### Résumé de l'invention

Un premier objectif de la présente invention consiste à fournir un système de connexion de panneaux photovoltaïques sur une structure comprenant des câbles suspendus, dans lequel la fixation des panneaux est obtenue avec un dispositif comprenant un nombre de composants réduit et représentant un poids et un coût optimisé.

Un second objectif de la présente invention consiste à fournir un système pourvu de panneaux photovoltaïques dont l'installation engendre des frais relativement maîtrisés.

### Objet de l'invention

Au regard des observations ci-dessus, l'objet de la présent invention concerne un système de panneaux photovoltaïques adapté pour fixer des panneaux photovoltaïques au-dessus d'un support selon un angle d'inclinaison déterminé par rapport au support, le système comprenant des poteaux de support fixés sur ledit support, des câbles porteurs suspendus entre les poteaux de support et des moyens de fixation pour fixer les panneaux photovoltaïques aux câbles porteurs, lesdits moyens de fixation comprenant des éléments de support, tels que des poutres, assemblés aux câbles porteurs, caractérisé en ce que, le système comprend des câbles auxiliaires, lesdits câbles auxiliaires étant suspendus entre les poteaux de support et positionnés dans un plan vertical, de manière essentiellement parallèle aux câbles porteurs et à distance desdits câbles porteurs, lesdits moyens de fixation comprenant des éléments de fixation s'étendant dans un plan essentiellement vertical, lesdits éléments de fixation étant positionnés entre lesdits câbles porteurs et lesdits câbles auxiliaires, les éléments de fixation étant adaptés pour fixer les éléments de support aux câbles.

Selon un mode de réalisation de l'invention, chaque élément de fixation a essentiellement la forme d'un H, préférablement la forme d'un H, chaque élément de fixation comprenant une première et une deuxième jambe verticales pour fixer l'élément de fixation entre un câble porteur et un câble auxiliaire, et une troisième jambe horizontale, fixée entre lesdites première et deuxième jambes verticales, pour fournir un élément de réception adapté pour recevoir une extrémité d'un élément de support.

Selon un mode de réalisation de l'invention, l'élément de réception est adapté pour fixer ladite extrémité dudit élément de support de manière mobile en rotation par rapport à l'élément de fixation.

Selon un mode de réalisation de l'invention, l'élément de fixation comprend une première partie fixée sur ledit élément de réception et une deuxième partie mobile en rotation par rapport à ladite première partie.

Selon un mode de réalisation de l'invention, l'élément de fixation comprend un élément d'actionnement, tel qu'un moteur électrique, pour entraîner la deuxième partie dudit élément de fixation en rotation par rapport à la première partie.

Selon un mode de réalisation de l'invention, l'élément d'entraînement est connecté à un dispositif de contrôle, adapté pour transmettre des instructions audit élément d'entraînement afin de contrôler la position de la première partie dudit élément de fixation par rapport à la position de la deuxième partie de l'élément de fixation, de façon optionnelle, ledit dispositif de contrôle comprenant un ordinateur.

Selon un mode de réalisation de l'invention, le dispositif de contrôle comprend un module météorologique comprenant au moins un capteur pour collecter des paramètres météorologiques.

Selon un mode de réalisation de l'invention, les panneaux photovoltaïques comprennent des panneaux photovoltaïques à double face.

Selon un mode de réalisation de l'invention, le système est adapté pour positionner les panneaux photovoltaïques à une hauteur déterminée par rapport au support, ladite hauteur déterminée étant comprise entre 2 et 10 mètres, de préférence entre 3 et 8 mètres, plus préférentiellement entre 5 et 7,5 mètres.

Selon un mode de réalisation de l'invention, les panneaux photovoltaïques sont fixés sur les éléments de support de sorte que les panneaux photovoltaïques forment une pluralité de rangées, chaque rangée de panneaux photovoltaïques comprenant au moins deux panneaux photovoltaïques.

Selon un mode de réalisation de l'invention, le ratio (R) entre la longueur L de deux rangées adjacentes de panneaux photovoltaïques et la distance E entre les deux rangées adjacentes est compris entre 2 et 3, préférablement entre 2 et 2,5 plus préférentiellement entre 2,15 et 2,25.

Selon un mode de réalisation de l'invention, le système comprend un revêtement adapté pour recouvrir le support au-dessus duquel le système est fixé, ledit revêtement étant adapté pour augmenter la réflexion du rayonnement solaire sur ledit support.

Selon un mode de réalisation de l'invention, le système comprenant un écran adapté pour recouvrir au moins une partie de la surface délimitée par un ensemble d'au moins deux poteaux de support adjacents.

Selon un mode de réalisation de l'invention, l'invention concerne également une ombrière photovoltaïque comprenant le système selon l'invention.

### Brève description des dessins

Les but, objet et caractéristiques de l'invention apparaîtront plus clairement à la lecture de la description qui suit faite en référence aux figures dans lesquelles :
[Fig. 1] montre une vue schématique d'un système de panneaux photovoltaïques selon l'invention, ledit système étant installé dans un champ,
[Fig. 2] représente une vue détaillée d'un poteau de support d'un système de panneaux photovoltaïques selon la figure 1,
[Fig. 3] montre une partie du système selon l'invention pour représenter la fixation des éléments de fixation sur des câbles porteurs et câbles auxiliaires,
[Fig. 4] représente la même partie du système selon l'invention, tel que montré sur la figure 3, les panneaux photovoltaïques étant installés selon une deuxième orientation par rapport au support,
[Fig. 5] montre un premier mode de réalisation d'un élément de fixation selon l'invention, selon une vue illustrant un premier côté,
[Fig. 6] représente l'élément de fixation selon la figure 5, selon une vue illustrant un côté opposé au premier côté,
[Fig. 7] montre une deuxième mode de réalisation d'un élément de fixation selon l'invention, et
[Fig. 8] représente une vue détaillée de la fixation d'un élément de fixation sur un câble porteur.

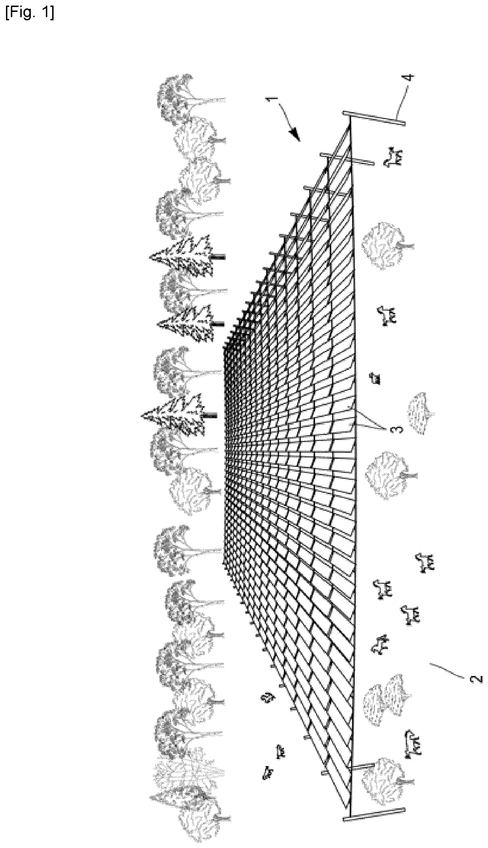

La figure 1 montre une vue schématique d'un système de panneaux photovoltaïques 1 selon l'invention. Ledit système de panneaux photovoltaïques 1 est positionné sur le sol 2, dans un champ, ledit sol 2 formant le support dudit système de panneaux photovoltaïques 1. Comme illustré sur la figure 1, le système de panneaux photovoltaïques 1 comprend une pluralité de panneaux photovoltaïques 3 disposés au-dessus du sol 2, selon une inclinaison déterminée par rapport audit sol 2. Les panneaux photovoltaïques peuvent comprendre par exemple des panneaux photovoltaïques à double face.

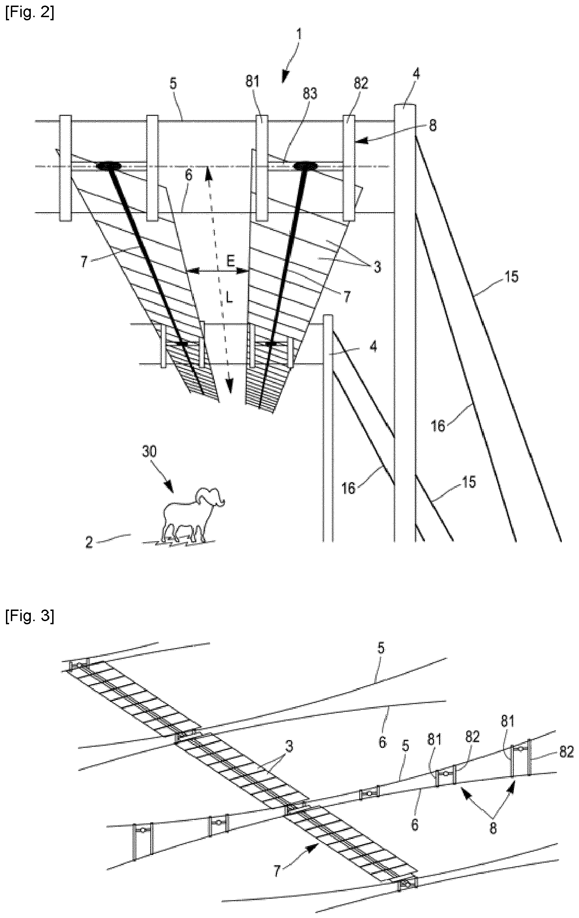

Selon l'exemple illustré sur la figure 1, les panneaux photovoltaïques 3 sont positionnés à une distance déterminée par rapport au sol 2 afin de permettre l'utilisation du sol pour une activité agricole. Selon cet exemple, le sol sert à accueillir des troupeaux de bétail 30 (également visibles sur la figure 2) pouvant paître librement sous lesdits panneaux photovoltaïques 3. Selon le même exemple, les panneaux photovoltaïques 3 permettent l'utilisation du sol 2 au-dessous des panneaux photovoltaïques 3 car ils sont positionnés à une distance déterminée par rapport au sol 2, ladite distance étant comprise entre 2 et 10 mètres, de préférence entre 3 et 8 mètres, et plus préférentiellement entre 5 et 7,5 mètres. Le positionnement des panneaux photovoltaïques 3 au-dessus du sol 2 et à une telle distance du sol permet aux agriculteurs de circuler librement au-dessous des panneaux photovoltaïques, d'utiliser leurs machines agricoles au-dessous desdits panneaux photovoltaïques 3 afin, notamment, de réaliser des activités relatives à la culture de terres agricoles.

Il est évidemment possible d'envisager d'autres utilisations agricoles. En effet, à titre d'exemple, l'espace disponible sous les panneaux photovoltaïques 3 peut être utilisé pour la culture de toute végétation, par exemple des arbres fruitiers, des légumes ou encore des fleurs.

La présence des panneaux photovoltaïques 3 permet aux agriculteurs de considérer l'utilisation du sol 2 comme une première source de revenus. Le système 1 pourvu de panneaux photovoltaïques 3 permet la production d'énergie électrique générée par ledit système 1, ce qui représente pour les agriculteurs une deuxième source de revenus. En effet, par exemple, les agriculteurs peuvent louer un ou plusieurs terrains à un opérateur d'ombrières photovoltaïques, lesdits terrains comprenant des systèmes 1 pourvu de panneaux photovoltaïques 3 selon l'invention.

Un aspect important de l'invention réside dans la présence des panneaux photovoltaïques 3 situés au-dessus du sol 2 pour offrir aux agriculteurs la possibilité d'optimiser l'utilisation dudit sol 2. A titre d'exemple, la présence des panneaux photovoltaïques 3 permet de créer des zones ombragées, sur la surface au sol située au-dessous desdits panneaux photovoltaïques, afin de protéger la végétation cultivée sur cette surface au sol du rayonnement solaire direct parfois néfaste pour les cultures lorsque ledit rayonnement solaire est trop important. La présence des panneaux photovoltaïques permet également d'assurer une protection, pour tout végétal ou animal situé au-dessous desdits panneaux photovoltaïques, contre de fortes précipitations, sous forme de grêle par exemple.

Selon la présente invention, les panneaux photovoltaïques 3 peuvent être fixés afin de conserver une position immobile lors de leur utilisation. Selon la présente invention, les panneaux photovoltaïques 3 peuvent également être fixés afin d'être mobiles en rotation lors de leur utilisation.

L'inclinaison des panneaux photovoltaïques 3 permet d'ajuster la quantité de rayonnement solaire sur la végétation en culture au-dessous desdits panneaux photovoltaïques 3 ce qui engendre une régulation du niveau de protection solaire assurée par lesdits panneaux photovoltaïques 3.

Par ailleurs, la présence d'un système 1 pourvu de panneaux photovoltaïques 3 selon l'invention permet aux agriculteurs d'assurer, au-dessous desdits panneaux photovoltaïques 3, des conditions optimales pour les cultures agricoles. En effet, à titre d'exemple, un système d'arrosage et/ou de brumisation peut être intégré au sein du système 1 pourvu de panneaux photovoltaïques 3, permettant ainsi à la végétation ou aux cultures agricoles de recevoir un arrosage et/ou une brumisation adaptés. La présence de tels panneaux photovoltaïques 3 permet alors d'éviter une évaporation rapide de l'eau fournie par le système d'arrosage et/ou de brumisation en direction du sol 2.

Afin d'optimiser l'utilisation du système 1 pourvu de panneaux photovoltaïques 3 selon l'invention, et ce à des fins agricoles, il est possible d'intégrer, aux extrémités dudit système 1, un écran adapté pour recouvrir au moins une partie de la surface au sol délimitée par l'ensemble des poteaux 4 formant le support du système 1 pourvu de panneaux photovoltaïques 3. Un écran de ce type (non montré sur la figure 1), peut être fourni sous la forme de filets. Le but de l'utilisation d'un tel écran consiste à renforcer l'effet de serre obtenu avec le système 1. Une autre alternative d'écran peut être réalisée en plantant des arbres de densité optimale sur une zone au sol située au-dessous des panneaux photovoltaïques 3, obturant ainsi au moins une partie de l'espace situé entre les poteaux 4. Le périmètre du système 1 pourvu de panneaux photovoltaïques 3 selon la figure 1 peut, par exemple, être partiellement fermé grâce à des plantations de conifères.

Le système 1 pourvu de panneaux photovoltaïques 3 peut également être utilisé pour récupérer une quantité d'eau de pluie en équipant ledit système 1 de gouttières (non montrées sur la figure 1). Ces gouttières sont adaptées pour collecter et amener ladite quantité d'eau de pluie ainsi récupérée vers des points de récolte, tels qu'une citerne, afin de réutiliser ladite quantité d'eau de pluie. L'eau de pluie ainsi récoltée et stockée dans ladite citerne peut ensuite alimenter des systèmes d'arrosage et assurer ainsi l'arrosage de la végétation ou des cultures présentes sous les panneaux photovoltaïques 3. Un tel système d'arrosage peut se présenter sous la forme d'un goutte-à-goutte au pied desdites cultures.

La figure 2 montre une vue détaillée du système 1 pourvu de panneaux photovoltaïques 3 selon la figure 1, et notamment les moyens de fixation desdits panneaux photovoltaïques 3 à une distance déterminée par rapport au sol 2.

Le système 1 pourvu de panneaux photovoltaïques 3 comprend des poteaux de support 4 fixés sur le sol 2. Ces poteaux de support 4 peuvent se présenter sous la forme de tubes, de profilés ou de toute autre forme adaptée. La figure 2 représente uniquement la partie du poteau de support 4 qui située à l'extérieur du sol 2. Le poteau de support 4 est pourvu d'un ancrage dans le sol 2, par exemple en forme d'un poids mort tel qu'un bloc de béton. Le poteau de support 4 peut être réalisé dans tout matériau adapté, tel que de l'acier, de l'aluminium ou un matériau composite.

Comme montré sur les figures 1 et 2, le système 1 comprend également des câbles porteurs 5 suspendus entre deux poteaux de support 4 opposés. Les câbles porteurs 5 sont utilisés pour fixer des panneaux photovoltaïques 3. Le système 1 pourvu de panneaux photovoltaïques 3 est aussi pourvu de câbles auxiliaires 6, s'étendant de façon essentiellement parallèle et à une distance verticale par rapport aux câbles porteurs 5. Pour rigidifier l'installation, le système 1 comprend des câbles d'ancrage 15, 16 fixés respectivement dans la continuité des câbles porteurs 5 et des câbles auxiliaires 6. Les câbles d'ancrage 15, 16 sont adaptés pour connecter la partie supérieure des poteaux de support 4 avec le sol 2, évitant ainsi d'occasionner une déformation des poteaux de support 4 qui pourrait être causée par le poids des panneaux photovoltaïques 3 lors de l'utilisation du système 1. De façon alternative, un seul câble d'ancrage peut être utilisé. Le câble d'ancrage unique peut être fixé sur les poteaux de support 4, à proximité de l'extrémité supérieure des poteaux de support 4, par exemple dans la continuité des câbles porteurs 5. De manière alternative, le câble d'ancrage unique peut être fixé sur les poteaux de support 4, à distance de l'extrémité supérieure des poteaux de support 4, dans une zone située entre les deux extrémités des câbles porteurs 5 et des câbles auxiliaires 6 fixées sur les poteaux de support 4.

Comme illustré sur la figure 2, les panneaux photovoltaïques 3 sont fixés à l'aide d'éléments de support 7 qui sont eux-mêmes fixés sur l'ensemble des câbles porteurs 5 et des câbles auxiliaires 6. Chaque élément de support 7 comprend une section de forme carrée à une première et à une deuxième extrémités. Chaque élément de support 7 se présente sous la forme de poutres ou de tubes. Les panneaux photovoltaïques 3 sont fixés sur les éléments de support 7 afin de former des rangées de panneaux photovoltaïques 3. Selon l'exemple illustré sur la figure 2, une rangée de panneaux photovoltaïques 3 comprend 10 panneaux photovoltaïques 3. De manière générale, la rangée de panneaux photovoltaïques peut comporter n'importe quelle quantité de panneaux photovoltaïques 3, afin de s'adapter à tous types de besoins. Le rapport ou ratio R entre la longueur L de deux rangées adjacentes de panneaux photovoltaïques et la distance E entre les deux rangées adjacentes est compris entre 2 et 3, préférablement entre 2 et 2,5 plus préférentiellement entre 2,15 et 2,25.

Les éléments de support 7 sont fixés sur les câbles porteurs 5 à l'aide d'éléments de fixation 8. Un mode de réalisation des éléments de fixation 8 est montré de façon plus détaillée sur les figures 3 à 8.

Comme montré sur la figure 2, l'élément de fixation 8 se présente essentiellement sous la forme d'un H et comprend une première jambe 81, une deuxième jambe 82 et un élément de liaison 83. Les jambes 81, 82 s'étendent dans leur position d'utilisation selon une direction verticale. Les jambes 81 et 82 sont fixées, à leur première extrémité supérieure, sur un câble porteur 5 et, à leur deuxième extrémité inférieure, sur un câble auxiliaire 6. Selon la position d'utilisation représentée sur la figure 2, l'élément de liaison 83 s'étend essentiellement selon une direction horizontale. Comme expliqué en détail ci-dessous, les éléments de support 7 sont fixés sur les éléments de liaison 83 à l'aide de liaisons pivotantes, tels que des roulements, pour permettre aux éléments de support 7 d'être mobiles en rotation par rapport aux éléments de fixation 8.

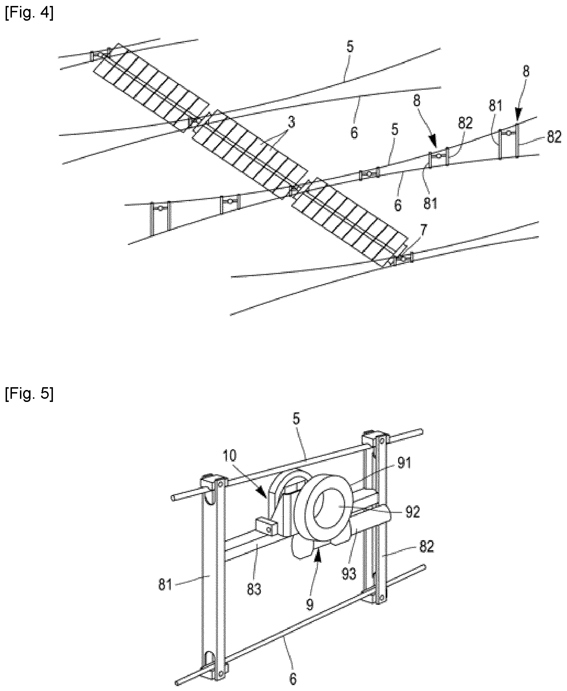

Une partie du système 1 selon l'invention, est représentée sur les figures 3 et 4, afin d'expliquer en détails le fonctionnement du système 1.

La figure 3 montre que la distance qui sépare le câble porteur 5 et le câble auxiliaire 6 n'est pas identique en tous points du câble porteur 5 et du câble auxiliaire 6.

Comme illustré sur la figure 3, la distance entre le câble porteur 5 et le câble auxiliaire 6 est minime si l'on considère une zone médiane située à proximité du milieu de la longueur respective du câble porteur 5 et du câble auxiliaire 6. La distance entre le câble porteur 5 et le câble auxiliaire 6 est élevée si l'on considère une zone d'extrémité située à proximité des extrémités respectives du câble porteur 5 et du câble auxiliaire 6. L'existence de cette différence de distance entre le câble porteur 5 et le câble auxiliaire 6 impliquent que les éléments de fixation 8, permettant de fixer les panneaux photovoltaïques 3, présentent une forme différente en fonction de l'endroit où ils sont fixés, entre le câble porteur 5 et le câble auxiliaire 6. Par ailleurs, la figure 3 montre que les éléments de fixation 8 possèdent des dimensions minimales lorsqu'ils sont situés dans une zone médiane, c'est-à-dire à proximité du milieu de la longueur du câble porteur 5 et du câble auxiliaire 6. Les éléments de fixation 8 possèdent des dimensions maximales lorsqu'ils sont situés dans une zone d'extrémité, c'est-à-dire à proximité des extrémités du câble porteur 5 et du câble auxiliaire 6.

La dimension des éléments de fixation 8, et plus particulièrement, la longueur des première jambe 81 et deuxième jambe 82 desdits éléments de fixation 8, est telle que les éléments de liaison 83 respectifs soient essentiellement parallèles les uns par rapport aux autres. Les détails des éléments de fixation 8 sont représentés sur les figures 5 à 8.

La figure 3 représente les panneaux photovoltaïques 3, selon une première inclinaison par rapport au sol 2. La figure 4 représente les panneaux photovoltaïques 3 selon une deuxième inclinaison par rapport au sol 2. Les figures 3 et 4 montrent que les panneaux photovoltaïques sont mobiles en rotation par rapport au câble porteur 5 et au câble auxiliaire 6 et ce, grâce aux moyens de fixation comprenant les éléments de support 7 et les éléments de fixation 8.

L'utilisation des éléments de fixation 8, en forme de « H », permet d'obtenir une fixation des panneaux photovoltaïques sur le câble porteur 5 et les câbles auxiliaires 6, ce qui permet de rigidifier la structure du système 1 selon l'invention.

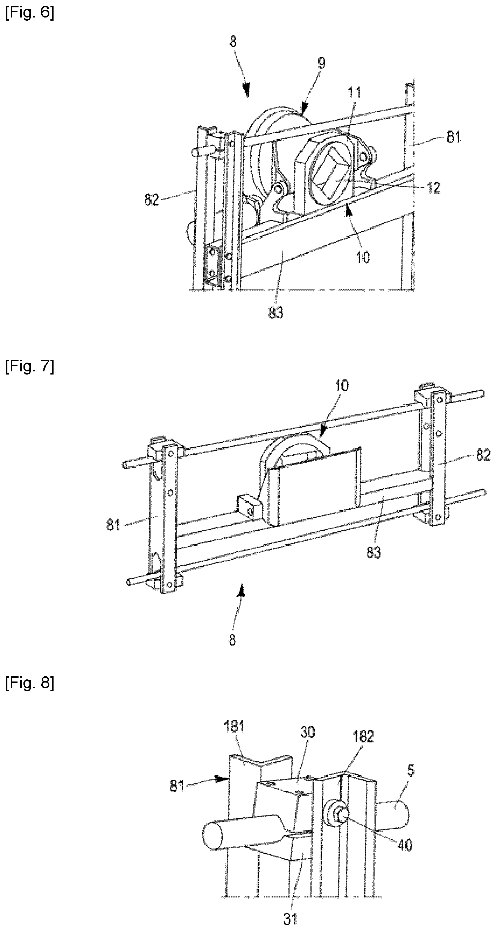

La figure 5 représente une vue détaillée d'un premier mode de réalisation d'un élément de fixation 8, selon un premier côté dudit élément de fixation 8. Comme montré sur la figure 5, l'élément de fixation 8 comporte la première jambe 81 positionnée selon une direction essentiellement verticale, entre le câble porteur 5 et le câble auxiliaire 6. Les détails de la fixation sur le câble porteur 5 et les câbles auxiliaires 6 sont représentés de façon plus détaillée sur la figure 8. L'élément de fixation 8 est également pourvu de la deuxième jambe 82. La première jambe 81 et la deuxième jambe 82 sont essentiellement parallèles. L'élément de liaison 83 est fixé entre la première jambe 81 et la deuxième jambe 82. L'ensemble composé de la première jambe 81, de la deuxième jambe 82 et de l'élément de liaison 83 forme essentiellement un « H ».

Selon leur position d'utilisation, les première et deuxième jambes 81, 82 sont positionnées selon une direction essentiellement verticale, l'élément de liaison 83 est positionné selon une direction essentiellement horizontale.

La figure 5 illustre l'élément de liaison 83 sur lequel un joint pivotant 9 est montré. Le joint pivotant 9 comprend des moyens d'actionnement comprenant un premier élément 91 fixé sur l'élément de liaison 83. Les moyens d'actionnement comprennent également un deuxième élément 92 localisé au centre du premier élément 91, ledit deuxième élément 92 étant mobile en rotation par rapport audit premier élément 91. Les moyens d'actionnement comprennent également un élément d'actionnement 93 se présentant sous la forme, par exemple, d'un moteur électrique et permettant d'entraîner la rotation du deuxième élément 92 par rapport au premier élément 91. Les moyens d'actionnement comprennent également un dispositif de contrôle permettant de contrôler le pivotement du deuxième élément 92 par rapport au premier élément 91, au sein du joint pivotant 9. Le dispositif de contrôle est connecté à l'élément d'actionnement 93 et comprend, par exemple, un module météorologique comprenant au moins un capteur pour collecter des paramètres météorologiques. De cette façon, la position de l'élément de support 7, connecté au deuxième élément 92, ainsi que l'inclinaison des panneaux photovoltaïques 3 fixés sur ledit élément de support 7 peuvent être contrôlées. Comme illustré sur les figures 5, 6 et 7, le deuxième élément 92 est pourvu d'une ouverture ou élément de réception ayant une forme essentiellement carrée. Cette forme carrée permet de recevoir une extrémité d'un premier élément de support 7, dont la section est de forme carrée. Ainsi, lorsque l'extrémité du premier élément de support 7 est positionnée dans l'ouverture de forme carrée du deuxième élément 92, la rotation dudit deuxième élément 92 entraîne la rotation du premier élément de support 7, tout en empêchant un mouvement relatif entre ledit premier élément de support 7 et ledit deuxième élément 92 du joint pivotant 9.

La figure 5 montre un élément à libre rotation 10 fixé sur l'élément de liaison 83, ledit élément à libre rotation 10 étant représenté de façon plus détaillée sur la figure 6.

La figure 6 représente une vue de l'élément de fixation 8, selon un côté opposé à celui représenté selon la figure 5. Comme montré sur la figure 6, l'élément à libre rotation 10 comprend un premier élément 11 fixé sur l'élément de liaison 83. Le centre de l'élément à libre rotation 10 est pourvu d'un élément 12 adapté pour tourner librement par rapport au premier élément 11. L'élément à libre rotation 10 permet de recevoir une extrémité d'un deuxième élément de support 7. En se référant aux figures 3 et 4, l'on peut comprendre que grâce à la présence de l'élément de fixation 8, l'extrémité du premier élément de support 7 est reçue à l'intérieur du joint pivotant 9, permettant ainsi audit premier élément de support 7 d'être orienté par rapport au sol à l'aide dudit joint pivotant 9. De plus, l'extrémité dudit deuxième élément de support 7 est reçue à l'intérieur de l'élément à libre rotation 10, permettant ainsi à l'extrémité du deuxième élément de support 7 de suivre le mouvement du premier élément de support 7, ce dernier étant entraîné en mouvement à l'aide du joint pivotant 9. Comme montré sur la figure 6, l'élément 12 de l'élément à libre rotation 10 est pourvu d'une ouverture de forme essentiellement carrée ou élément de réception. Cela signifie qu'une extrémité d'un élément de support 7, pourvue d'une section transversale carrée, peut-être reçue à l'intérieur de l'élément 12 de l'élément à libre rotation 10.

Ainsi, l'élément de fixation 8, tel que représenté sur les figures 5 et 6, peut être utilisé dans le système 1 selon l'invention en tant qu'élément intermédiaire pour connecter deux éléments de support 7 entre eux. Comme montré sur la figure 5, selon un premier côté de l'élément de fixation 8, le deuxième élément 92 peut recevoir une extrémité d'un premier élément de support 7 afin d'actionner ladite première extrémité dudit premier élément de support 7 à l'aide de l'élément d'actionnement 93. Comme montré sur la figure 6, selon un côté opposé au premier côté de l'élément de fixation 8, l'élément à libre rotation 10 peut recevoir une extrémité d'un deuxième élément de support 7.

Par conséquent, au sein de l'élément de fixation 8, le joint pivotant 9 et l'élément à libre rotation 10 comprennent chacun une ouverture adaptée pour recevoir une extrémité d'un élément de support 7.

La figure 7 montre un deuxième mode de réalisation d'un élément de fixation 8, sur lequel est fixé uniquement un élément à libre rotation 10, entre la première jambe 81 et la deuxième jambe 82. Un tel élément de fixation 8 peut être utilisé à l'extrémité d'un système 1 selon l'invention. Selon ce mode de réalisation de l'élément de fixation 8, un joint pivotant 9 peut éventuellement être fixé à la place dudit élément à libre rotation 10 sur l'élément de liaison 83.

La figure 8 représente une vue détaillée de la fixation de l'élément de fixation 8 sur un câble porteur 5. La figure 8 montre le câble porteur 5 sur lequel est fixée l'extrémité supérieure d'une première jambe 81, ladite extrémité supérieure de la première jambe 81 comprenant un premier élément 181 et un deuxième élément 182. Un premier bloc 30 est fixé entre les deux extrémités du premier élément 181 et du deuxième élément 182 à l'aide d'un ensemble de fixation 40 composé, par exemple, d'une vis et d'un boulon. Les blocs 30 et 31 sont chacun pourvus d'un évidement essentiellement semi-circulaire. L'évidement des blocs 30 et 31 peut recevoir la section du câble porteur 5, permettant ainsi la fixation desdits blocs 30 et 31 sur l'extérieur dudit câble porteur 5. Le deuxième bloc 31 est fixé au premier bloc 30 à l'aide de boulons afin de sécuriser la position du câble porteur 5 entre les premier et deuxième blocs 30, 31. L'extrémité inférieure de la jambe 81 peut être fixée, de façon identique, sur un câble auxiliaire 6.

Le système 1 selon l'invention peut également comprendre un revêtement adapté pour recouvrir le support au-dessus duquel le système est fixé, ledit revêtement étant adapté pour augmenter la réflexion du rayonnement solaire sur ledit support.

La présente invention concerne également une ombrière photovoltaïque comprenant le système 1 selon l'invention.

Les modes de réalisation précédemment décrits sont indiqués à titre d'exemples uniquement.

## Revendications

1. Système de panneaux photovoltaïques (1) fixés au-dessus d'un support (2) selon un angle d'inclinaison déterminé par rapport au support (2), le système (1) comprenant des poteaux de support (4) fixés sur ledit support (2), des câbles porteurs (5) suspendus entre les poteaux de support (4) et des moyens de fixation pour fixer les panneaux photovoltaïques (3) aux câbles porteurs (5), lesdits moyens de fixation comprenant des éléments de support (7), tels que des poutres, assemblés aux câbles porteurs (5), **caractérisé en ce que**, le système (1) comprend des câbles auxiliaires (6), lesdits câbles auxiliaires (6) étant suspendus entre les poteaux de support (4) et positionnés dans un plan vertical, de manière essentiellement parallèle aux câbles porteurs (5) et à distance desdits câbles porteurs (5), lesdits moyens de fixation comprenant des éléments de fixation (8) s'étendant dans un plan essentiellement vertical, lesdits éléments de fixation (8) étant positionnés entre lesdits câbles porteurs (5) et lesdits câbles auxiliaires (6), les éléments de fixation (8) étant adaptés pour fixer les éléments de support (7) aux câbles (5, 6).

2. Système (1) selon la revendication 1, dans lequel chaque élément de fixation (8) a essentiellement la forme d'un H, préférablement la forme d'un H, chaque élément de fixation comprenant une première (81) et une deuxième (82) jambe verticales pour fixer l'élément de fixation (8) entre un câble porteur (5) et un câble auxiliaire (6), et une troisième jambe (83) horizontale, fixée entre lesdites première (81) et deuxième (82) jambes verticales, pour fournir un élément de réception adapté pour recevoir une extrémité d'un élément de support (7).

3. Système (1) selon la revendication 2, dans lequel ledit élément de réception est adapté pour fixer ladite extrémité dudit élément de support (7) de manière mobile en rotation par rapport à l'élément de fixation (8).

4. Système (1) selon la revendication 2 ou 3, dans lequel l'élément de fixation (8) comprend une première partie fixée (91) sur ledit élément de réception et une deuxième partie (92) mobile en rotation par rapport à ladite première partie (91).

5. Système (1) selon la revendication 4, dans lequel l'élément de fixation (8) comprend un élément d'actionnement (93), tel qu'un moteur électrique, pour entraîner la deuxième partie (92) dudit élément de fixation (8) en rotation par rapport à la première partie (91).

6. Système (1) selon la revendication 5, dans lequel ledit élément d'entraînement (93) est connecté à un dispositif de contrôle, adapté pour transmettre des instructions audit élément d'entraînement (93) afin de contrôler la position de la première partie (91) dudit élément de fixation (8) par rapport à la position de la deuxième partie (92) de l'élément de fixation, de façon optionnelle, ledit dispositif de contrôle comprenant un ordinateur.

7. Système (1) selon la revendication 6, dans lequel le dispositif de contrôle comprend un module météorologique comprenant au moins un capteur pour collecter des paramètres météorologiques.

8. Système (1) selon l'une des revendications précédentes, dans lequel les panneaux photovoltaïques (3) comprennent des panneaux photovoltaïques à double face.

9. Système (1) selon l'une des revendications précédentes, dans lequel le système (1) est adapté pour positionner les panneaux photovoltaïques (3) à une hauteur déterminée par rapport au support (2), ladite hauteur déterminée étant comprise entre 2 et 10 mètres, de préférence entre 3 et 8 mètres, plus préférentiellement entre 5 et 7,5 mètres.

10. Système (1) selon l'une des revendications précédentes, dans lequel les panneaux photovoltaïques (3) sont fixés sur les éléments de support (7) de sorte que les panneaux photovoltaïques (3) forment une pluralité de rangées, chaque rangée de panneaux photovoltaïques (3) comprenant au moins deux panneaux photovoltaïques (3).

11. Système (1) selon la revendication 10, dans lequel le ratio (R) entre la longueur L de deux rangées adjacentes de panneaux photovoltaïques (3) et la distance E entre les deux rangées adjacentes est compris entre 2 et 3, préférablement entre 2 et 2,5 plus préférentiellement entre 2,15 et 2,25.

12. Système (1) selon l'une des revendications précédentes, dans lequel le système (1) comprend un revêtement adapté pour recouvrir le support (2) au-dessus duquel le système (1) est fixé, ledit revêtement étant adapté pour augmenter la réflexion du rayonnement solaire sur ledit support.

13. Système (1) selon l'une des revendications précédentes, ledit système (1) comprenant un écran adapté pour recouvrir au moins une partie de la surface délimitée par un ensemble d'au moins deux poteaux de support (4) adjacents.

14. Ombrière photovoltaïque comprenant le système (1) selon l'une des revendications précédentes.
